# DEMANDE DE BREVET EUROPEEN

(11) **EP 3 343 783 A1**
(43) Date de publication de la demande: **04.07.2018**
(21) Numéro de dépôt: 17210214.7
(22) Date de dépôt: 22.12.2017
(51) Int. Cl.: H04B 1/04, G08B 13/04, G08B 13/16, G08B 21/20, E06B 3/66

(54) **CIRCUIT ÉLECTRONIQUE DE DÉTECTION POUR VITRAGE**

(30) Priorité: 28.12.2016 FR 1663465
(71) Demandeur: Saint-Gobain Glass France, 92400 Courbevoie (FR)
(72) Inventeur: WEISSLER, Ariane, 52064 AACHEN (DE); KUSTER, Hans-Werner, 52066 AACHEN (DE); EFFERTZ, Christian, 52080 AACHEN (DE); LAMINE, Driss, 92160 Antony (FR)
(74) Mandataire: Saint-Gobain Recherche

(57) **Abrégé**

La présente invention concerne un circuit électronique comprenant une unité de calcul (10) a laquelle sont connectés un module de détection de mouvement (16), un module de détection de casse (18) et un module de communication (14), caractérisé en ce que ledit module de détection de mouvement est agencé pour acquérir des données représentatives de mouvement issus d'un comportement et les transmettre à l'unité de calcul, lequel utilise un algorithme afin de déterminer le type de comportement détecté et opère une réponse spécifique selon ledit type de comportement détecté.

## Description

### DOMAINE TECHNIQUE DE L'INVENTION

Le domaine technique de l'invention est celui des circuits électroniques pour vitrage. Un premier aspect de l'invention concerne un circuit électronique d'au moins un vitrage. Un deuxième aspect de l'invention concerne un procédé de fonctionnement dudit circuit électronique.

### ARRIERE-PLAN TECHNOLOGIQUE DE L'INVENTION

Les vitrages sont typiquement utilisés afin de séparer de manière transparente un environnement intérieur d'un environnement extérieur. Les vitrages trouvent ainsi de nombreuses applications dans la réalisation de fenêtres, portes ou vitrines. Ces vitrages sont toutefois des éléments fragiles qui peuvent être cassés volontairement ou involontairement.

Il existe donc des dispositifs d'alarme en cas de casse. Un dispositif connu consiste en un circuit électronique pour vitrage comprenant un capteur d'humidité afin de détecter la casse. Un tel capteur est utilisé pour un vitrage isolant, encore appelé double vitrage, comprend une première vitre ou feuille de verre extérieure, une deuxième vitre ou feuille de verre intérieure et un cadre espaceur s'étendant continument le long du bord de la première et de la deuxième vitre, un espace intercalaire étanche étant délimité par le cadre espaceur entre les deux vitres. Un capteur d'humidité fonctionne sur le principe qu'en cas de casse, le niveau d'humidité varie dans l'espace entre les deux vitres.

Le circuit électronique pour vitrage de l'art antérieur comprend en outre un capteur de mouvement afin de détecter un mouvement sur le vitrage et d'envoyer une commande au capteur d'humidité, lui-même envoyant un signal d'alarme en cas de casse. Cela permet de savoir si l'une des vitres se casse suite au choc détecté.

Un inconvénient de ce dispositif d'alarme est qu'il est limité au vitrage isolant à cause de l'utilisation d'un capteur d'humidité. Cela limite l'utilisation d'un tel circuit électronique puisqu'il ne peut être associé au vitrage isolant que lors de la construction de celui-ci et ne permet donc pas d'équiper des vitrages isolants déjà assemblés.

Un second inconvénient est que ce circuit électronique est limité à la détection d'une casse. En effet, le circuit électronique de l'art antérieur utilise le capteur de mouvement pour activer le capteur d'humidité qui va ensuite détecter ou non une casse. Or, les fenêtres utilisant ces vitrages sont susceptibles de subir d'autres mouvements. Ces mouvements de la fenêtre peuvent être une ouverture par pivotement vertical sur leur bord ou par basculement sur un axe vertical pour permettre en particulier l'entrebâillement.

Il existe également des circuits de détection de casse utilisant un capteur piezoélectrique. Un tel capteur fonctionne sur le principe de la mesure d'une tension de surface de sorte que si la tension de surface varie, la tension électrique issue dudit capteur varie. Or, dans le cas où le circuit de détection est posé sur un vitrage, la casse de ce dernier entraîne une modification brutale de la tension de surface. Cette modification brutale est détectée par ledit circuit qui envoie un signal d'alarme.

Un tel circuit ne permet alors la détection que d'un seul et unique évènement, ici une casse de vitrage. Par conséquent, un circuit de détection de casse utilisant un capteur piezoélectrique a une utilisation restreinte.

Ainsi, il existe un besoin pour un appareil de détection ayant une large palette d'utilisation permettant, non seulement de détecter une casse, mais aussi de connaitre le statut d'un vitrage pour des raisons de sécurité ou pour éviter les courants d'air ou intrusions d'eau.

### RESUME DE L'INVENTION

L'invention offre une solution au problème évoqué précédemment, en permettant de fournir un dispositif pour vitrage ayant une large utilisation et permettant de connaitre le statut d'un vitrage et de réagir en conséquence.

A cet effet, l'invention concerne un circuit électronique comprenant une unité de calcule à laquelle sont connectés un module de détection de mouvement, un module de détection de casse et un module de communication, caractérisé en ce que ledit module de détection de mouvement est agencé pour acquérir données représentatives de mouvements issus d'un comportement et les transmettre à l'unité de calcul, lequel utilise un algorithme afin de déterminer le type de comportement détecté et opère une réponse spécifique selon ledit type de comportement détecté.

Un avantage du circuit électronique selon la présente invention est qu'il est capable de détecter un mouvement et d'en déduire sa nature parmi une pluralité afin d'apporter une réponse spécifique.

Selon une caractéristique de l'invention, une première réponse spécifique est la génération et l'envoi d'un signal d'information par le module de communication.

Selon une caractéristique de l'invention, une seconde réponse spécifique est la génération et l'envoi d'un signal d'alarme par le module de communication.

Selon une caractéristique de l'invention, une troisième réponse spécifique est l'acquisition de données par ledit module de détection de casse et le traitement de ses données pour déterminer une casse.

Selon une caractéristique de l'invention, le module de détection de casse comprend un capteur piézoélectrique.

Selon une caractéristique de l'invention, le module de détection de casse comprend un capteur d'humidité.

Selon une caractéristique de l'invention, le module de détection de mouvement comprend un accéléromètre et un magnétomètre.

Selon une caractéristique de l'invention, le module de détection de mouvement comprend en outre un gyroscope.

L'invention concerne en outre un vitrage qui comprend le circuit électronique selon l'invention.

Selon une caractéristique de l'invention, le vitrage comprenant une première vitre et une deuxième vitre parallèles et séparées par un cadre espaceur délimitant un espace intercalaire étanche entre lesdites vitres dans lequel le circuit électronique est agencé.

L'invention concerne également un procédé de fonctionnement d'un circuit électronique pour vitrage comprenant une unité de calcul à laquelle sont connectés un module de détection de mouvement comprenant au moins un accéléromètre et un magnétomètre, un module de détection de casse et un module de communication, caractérisé en ce qu'il est apte à fonctionner dans un mode de fonctionnement dit éco dans lequel l'unité de calcul, le module de communication, le module de détection de casse et le magnétomètre sont en veille, seul l'accéléromètre étant actif, et en ce que ledit procédé comprend les étapes suivantes :
- surveiller l'apparition de mouvements issus d'un type de comportement par l'intermédiaire de l'accéléromètre ;
- réveiller l'unité de calcul, le module de communication, le module de détection de casse et le magnétomètre lors de la détection d'un mouvement ;
- acquérir des données représentatives du comportement détecté par l'accéléromètre et le magnétomètre ;
- traiter les données représentatives du comportement par un algorithme de l'unité de calcul afin de déterminer le type de comportement détecté ;

Selon une caractéristique de l'invention, l'étape de détermination de la nature du comportement consiste à comparer le comportement détecté à une pluralité de comportements définis préalablement pour déterminer que :
- le comportement est naturel s'il correspond à l'un des comportements définis préalablement ;
- le comportement est non naturel s'il ne correspond pas à l'un des comportements définis préalablement ;
- le comportement est un choc s'il ne correspond pas à l'un des comportements définis préalablement et si l'amplitude de son mouvement est plus faible que pour un mouvement naturel ou non naturel.

Selon une caractéristique de l'invention, une première réponse spécifique est la génération d'un signal d'information par l'unité de calcul et son envoi par le module de communication lorsqu'un comportement naturel est détecté.

Selon une caractéristique de l'invention, une seconde réponse spécifique est la génération d'un signal d'alarme par l'unité de calcul et son envoi par le module de communication lorsqu'un comportement non-naturel est détecté.

Selon une caractéristique de l'invention, les types de comportements peuvent être paramétrés manuellement ou paramétrés par un algorithme d'apprentissage analysant les comportements récurrents afin de les intégrer comme étant des comportements de types naturels.

Selon une caractéristique de l'invention, le module de détection de casse comprend un capteur d'humidité afin d'acquérir des données lorsque ledit comportement détecté est un choc.

Selon une caractéristique de l'invention, le module de détection de casse comprend un capteur piezoélectrique afin d'acquérir des données lorsque ledit comportement détecté est un choc.

### BREVE DESCRIPTION DES FIGURES

L'invention et ses différentes applications seront mieux comprises à la lecture de la description qui suit et à l'examen des figures qui l'accompagnent. Les figures sont présentées à titre indicatif et nullement limitatif de l'invention :
- La figure 1 montre une représentation schématique circuit électronique selon l'invention.
- Les figures 2 et 3 montrent une représentation schématique du circuit électronique installé sur un support selon l'invention.
- La figure 4 montre une représentation schématique du procédé selon l'invention.
- La figure 5 montre une représentation schématique d'une variante avantageuse du circuit électronique installé selon l'invention.

### DESCRIPTION DETAILLEE

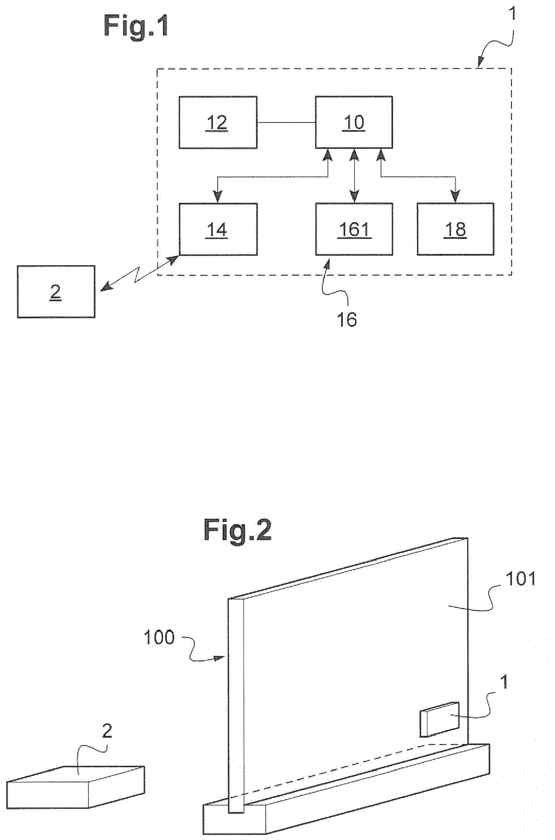

Sur la figure 1 est représenté schématiquement le circuit électronique 1 selon l'invention. Ce circuit électronique 1 est un boîtier alimenté par une source d'alimentation 12 interne pouvant être une pile ou un système rechargeable comme une cellule solaire connectée à un super condensateur. La source d'alimentation 12 pourra aussi être externe, par exemple le secteur. Le circuit électronique 1 comprend un microprocesseur ou unité de calcul 10 à laquelle sont reliés un module de communication 14, un module de détection de mouvement 16 et un module de détection de casse 18.

Le module de détection de mouvement 16 comprend au moins un capteur de mouvement permettant la détection d'un mouvement du support 100 sur lequel le circuit électronique 1 est monté, dans le cas présent le support 100 est un vitrage 101.

Le module de détection de casse 18 comprend au moins un capteur de détection de casse permettant de détecter la casse du support 100 sur lequel le circuit électronique 1 est monté.

Le module de communication 14 est agencé pour recevoir des signaux de l'unité de calcul 10 et les transmettre. Ce module de communication 14 utilise au moins un protocole de communication. Ce protocole de communication peut être filaire ou sans fil, à courte distance avec une portée de 0 à 10m (par exemple Bluetooth), moyenne distance avec une portée de 10 à 100m (par exemple Wifi) ou longue distance avec une portée supérieure à 100m (par exemple WPLAN). Bien entendu, plusieurs protocoles de communication pourront être utilisés par ce module de communication 14.

Le circuit électronique 1 est alors agencé pour équiper un support 100, ce support 100 pouvant être un vitrage 101 monté sur une fenêtre ou une porte ou une baie vitrée.

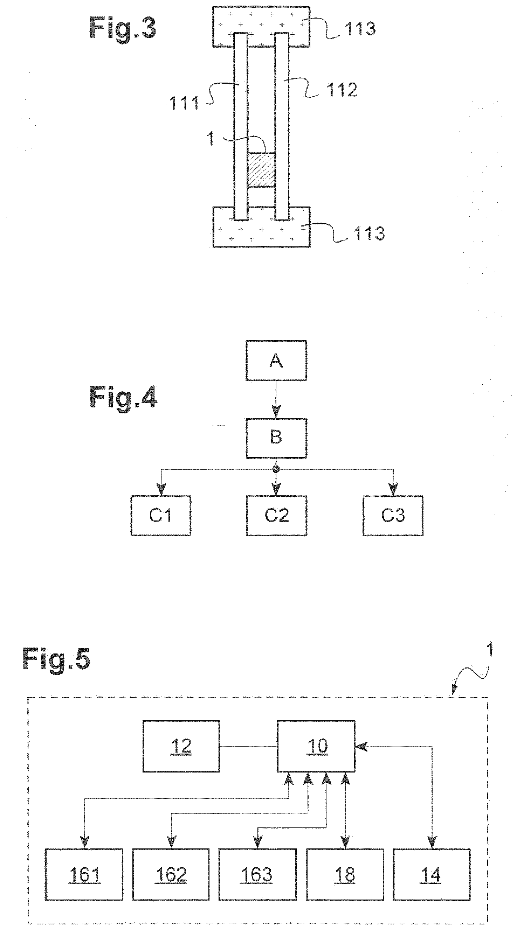

Selon l'invention, le circuit électronique 1 est agencé pour détecter un mouvement issu d'un comportement du support 100 le portant et déterminer la nature, le type dudit comportement comme visible à la figure 2. Une représentation schématique du procédé utilisé est illustrée à la figure 4.

Pour cela, le module de détection de mouvement 16 est utilisé, dans une étape A, afin d'acquérir des données représentatives du mouvement issu du comportement du support 100. Cette acquisition de données est opérée par au moins un capteur de mouvement tel qu'un accéléromètre 161. Ces données acquises sont alors transmises à l'unité de calcul 10.

Cette unité de calcul 10 comporte un algorithme capable de traiter ces données dans une étape B. Cet algorithme est capable de déterminer, à partir de ces données représentatives d'un mouvement issu d'un comportement, le comportement subit par le support 100. Ce comportement détecté est alors comparé à une liste prédéfinie de comportements afin d'en connaitre sa nature précise.

Pour cela, une étape préalable de définition du type de comportement est réalisée. Dans le cas de la présente invention, les comportements peuvent être de trois types différents. Un premier type de comportement est de dire que le comportement détecté est naturel. Un tel comportement naturel se défini comme étant un comportement pour lequel ledit support 100 a été conçu. En effet, pour un support 100 comme un vitrage 110 de fenêtre classique, il est naturel que ladite fenêtre 110 puisse être ouverte par pivotement vertical sur son bord.

Un second type de comportement est de dire que le comportement détecté est non-naturel. Un tel comportement non-naturel se défini comme étant un comportement pour lequel ledit support 100 n'a pas été conçu. En reprenant, comme support 100, un vitrage 110 de fenêtre classique, il n'est pas naturel que ladite fenêtre puisse subir un comportement incluant un mouvement vertical représentatif d'un dégondage.

Un troisième type de comportement est de dire que le mouvement issu du comportement détecté est un choc. Un choc se défini comme étant un mouvement de vibration. En effet, sur un vitrage 110 de fenêtre, un choc consiste en un mouvement de vibration de faible amplitude.

Par ailleurs, ces types de comportement peuvent être préprogrammés et/ou être définis par l'utilisateur final. En effet, le circuit électronique 1 selon l'invention peut être avantageusement programmé de sorte à permettre audit utilisateur de paramétrer les comportements de type naturel. Ce paramétrage des comportements naturels par l'utilisateur est une réponse à la personnalisation constante des habitats. Ce paramétrage permet ainsi à l'utilisateur, pour des vitrages montés sur des ouvrants non classiques, d'utiliser efficacement le circuit électronique 1 selon la présente invention.

Il est également possible que les types de comportement soient mémorisés dans ledit circuit électronique 1 via un algorithme d'apprentissage. En effet, l'algorithme du circuit électronique 1 pourra être conçu de sorte à analyser les comportements appliqués au vitrage 101 sur lequel le circuit électronique 1 est agencé. Cette analyse des comportements permet de déterminer les comportements qui sont récurrents afin de les intégrer comme étant des comportements de types naturels.

Une fois le type de comportement déterminé par l'algorithme, le circuit électronique 1 est astucieusement réalisé pour, via l'unité de calcul 10, opérer une réponse spécifique suivant le type de comportement détecté.

Selon la présente invention, lorsque le type de comportement détecté est considéré comme étant de type naturel, l'unité de calcul 10 est programmée, dans une étape C1, pour générer un signal d'information. Ce signal d'information est ensuite envoyé à un terminal externe 2 via le module de communication 14. Ce terminal externe 2 pourra être un boîtier central ou un appareil de type smartphone ou tablette communiquant spécifiquement avec le circuit électronique 1 ou avec une multitude de circuits électroniques 1.

Ce signal d'information permet de signaler que le support 100 du circuit électronique 1, comme une fenêtre, est ouvert ou fermé.

Dans un second cas dans lequel le type de comportement détecté est qualifié de non-naturel, l'unité de calcul 10 est programmée pour, dans une étape C2, générer un signal d'alarme. Ce signal d'alarme est ensuite envoyé à un terminal externe 2 via le module de communication 14. Effectivement, étant donné qu'un comportement non-naturel est défini comme étant un comportement pour lequel ledit support 100 n'a pas été conçu, cela signifie que le comportement correspond à une utilisation qui ne correspond pas à l'utilisation qui doit en être faite. En conséquence, un signal d'alarme permet d'avertir de cette utilisation non conforme. Ce signal d'alarme peut comprendre une commande d'activation d'un appareil sonore ou une commande d'appel pour un service de sécurité.

Dans le cas de la détection d'un choc, une étape C3 est réalisée. Cette étape C3 peut varier selon le module de détection de casse 18, le choc pouvant entrainer la casse.

Dans un premier mode d'exécution de l'invention, le module de détection de casse 18 comprend un capteur d'humidité. Un tel capteur d'humidité peut se présenter sous la forme de deux peignes métalliques interdigités présentant une capacité qui varie selon l'humidité présente. Pour une application de détection de casse, un tel capteur doit se trouver dans une enceinte close. Pour cela, l'utilisation d'un module de détection de casse 18 utilisant un capteur d'humidité n'est possible que pour un vitrage de type isolant appelé double ou triple vitrage. Un tel vitrage consiste en une vitre ou feuille de verre extérieure 111, une vitre ou feuille de verre intérieure 112 et un cadre espaceur 113 s'étendant continument le long du bord de la première et de la deuxième vitre, un espace intercalaire étanche 114 étant délimité par le cadre espaceur 113 entre les deux vitres 111, 112. Le capteur d'humidité est agencé dans l'espace 114 entre les deux vitres 111, 112 comme visible à la figure 3.

Dans le cas de la détection d'un choc, la réponse spécifique consiste à envoyer une commande au module de détection de casse 18 c'est-à-dire le capteur d'humidité. Cette commande permet au capteur d'humidité de prendre des mesures. Ces mesures sont réalisées sur un laps de temps prédéfini permettant de détecter une casse. En effet, la réalisation de ces mesures sur un laps de temps permet de détecter une variation de l'humidité consécutive à la casse d'une vitre du vitrage 110.

Ces mesures sont envoyées à l'unité de calcul 10 pour y être traitées. Cette unité de calcul 10 traite donc les données mesurées pour détecter une variation significative de l'humidité. En effet, il peut y avoir de petites variations d'humidité faisant suite à une variation de température extérieure par exemple. Il est donc nécessaire de définir un seuil de variation S, par exemple en pourcentage. De ce fait, si les données représentatives de l'humidité montrent que la valeur d'humidité varie, en pourcentage, d'une valeur supérieure ou égale au seuil de variation S, alors l'unité de calcul 10 en déduit qu'une casse est intervenue.

A ce moment-là, l'unité de calcul 10 génère un signal d'alarme qui sera transmis au terminal externe 2 via le module de communication 14. Ce signal d'alarme peut être une commande sonore ou une alerte transmise sur le smartphone de l'utilisateur.

Si le traitement des données représentatives de l'humidité ne montre pas de variations significatives alors l'unité de calcul 10 en déduit qu'il n'y a pas eu de casse. Par conséquent, l'unité de calcul 10 envoie un signal d'information transmis à un terminal externe 2 via le module de communication 14.

Dans un second mode d'exécution de l'invention, le module de détection de casse 18 comprend un capteur piézoélectrique. Un tel capteur piézoélectrique fonctionne sur le principe de la mesure de tension de surface de sorte que si celle-ci varie, la tension électrique détectée varie. Or, dans le cas d'une casse d'un vitrage, la tension de surface sur le vitrage est brutalement modifiée.

Par conséquent, contrairement à un capteur d'humidité, il n'est pas nécessaire de réaliser une pluralité de mesures dans un laps de temps défini pour constater une variation. Dans le cas d'un capteur piézoélectrique, la mesure de casse est instantanée, ladite mesure étant comparée à une valeur prédéterminée ou préprogrammé représentative d'une casse.

Selon une première façon de fonctionner, la détection d'un choc se fait par le module de détection de mouvement 16 qui reconnait un choc comme étant un mouvement de faible amplitude, tel une vibration. Une fois ce choc détecté, une commande est envoyée, par l'unité de calcul 10 au capteur de casse piézoélectrique qui opère une mesure qui sera traitée par l'unité de calcul 10.

Si la mesure est représentative d'une casse, alors l'unité de calcul 10 génère un signal d'alarme alors que, dans le cas contraire, l'unité de calcul 10 génère un signal d'information. Le signal généré par l'unité de calcul 10 est transmis à un terminal externe 2 via le module de communication 14.

Selon une seconde façon de fonctionner, le module de détection de mouvement 16 et le module de détection de casse 18 fonctionnent de concert. Par conséquent, lors d'un comportement de type choc, les capteurs du module de détection de mouvement 16 et du module de détection de casse 18 acquièrent simultanément des données. Ces données sont ainsi traitées par l'unité de calcul 10.

Si les données traitées amènent à la conclusion qu'il y a eu un choc mais pas de casse, l'unité de calcul 10 génère un signal d'information. Le signal généré est transmis à un terminal externe 2 via le module de communication 14.

Si les données traitées amènent à la conclusion qu'il y a eu un choc et une casse, l'unité de calcul 10 génère un signal d'alarme. Le signal d'alarme ainsi généré transmis à un terminal externe 2 via le module de communication 14.

Bien entendu, le circuit de détection de casse 18 pourra comprendre d'autres capteurs. Notamment, le circuit de détection de casse 18 pourra comprendre un capteur acoustique. Un tel capteur convertit le signal des ondes sonores en signal électrique en utilisant un transducteur acoustoélectrique. Cela permet de détecter une variation sonore de sorte que si l'onde sonore détectée augmente en intensité alors cela signifie que le vitrage n'est plus aussi performant en terme acoustique. Un tel capteur sera avantageusement agencé séparément du circuit électronique 1 porté par ledit vitrage 101. En effet, un tel capteur acoustique a pour but d'entendre le bruit du verre brisé et le bruit du verre tombant par terre.

Il pourra donc être prévu que le circuit électronique 1 comprenne une partie centrale muni de l'unité de calcul 10, d'un module de communication 14 et du module de détection de mouvement 16 et au moins une partie satellite comprenant ledit capteur acoustique et un module de communication 14 pour communiquer avec la partie centrale.

Dans une première variante avantageuse de l'invention et des différents modes d'exécution, le module de détection de mouvement 16 comprend une pluralité de capteurs. Le module de détection de mouvement 16 comprend ainsi au moins un accéléromètre 161 et un magnétomètre 162 servant à mesurer selon les cas l'intensité ou la direction d'un champ magnétique. Ces deux capteurs 161, 162 permettent ainsi de détecter le mouvement subit par le circuit électronique 1 en combinant la mesure de l'accélération avec la mesure de la variation de direction d'un champ magnétique, ici le champ magnétique terrestre.

Préférablement, le module de détection de mouvement 16 comprendra en outre un gyroscope 163 afin d'obtenir une meilleure précision sur le mouvement subit comme visible à la figure 5.

Dans une seconde variante de l'invention, le circuit électronique 1 est agencé pour optimiser la consommation électrique et allonger la durée de vie.

Pour cela, le circuit électronique 1 selon cette seconde variante est agencé inclure différents modes de fonctionnement.

La majorité du temps, le circuit électronique 1 fonctionne selon un premier mode de fonctionnement dans lequel seul l'accéléromètre 161 est actif. Les autres éléments tels que l'unité de calcul 10, les autres capteurs du module de détection de mouvement 16, le module de détection de casse 18 et le module de communication 14 sont dormants c'est-à-dire qu'ils fonctionnent au ralenti. Un tel fonctionnement au ralenti peut signifier que la fréquence de fonctionnement est plus faible ou que des fonctions sont éteintes.

Ce premier mode de fonctionnement permet ainsi d'économiser de l'énergie électrique.

Le circuit électronique 1 peut également fonctionner selon un second mode de fonctionnement dans lequel la totalité des éléments tels que l'unité de calcul 10, les capteurs du module de détection de mouvement 16, le module de détection de casse 18 et le module de communication 14 sont actifs c'est-à-dire qu'ils fonctionnent à leur potentiel maximal. Cela permet ainsi à l'unité de calcul 10 de traiter les données.

Pour passer du premier mode de fonctionnement au second mode de fonctionnement, l'accéléromètre 161 est utilisé. En effet, étant le seul capteur actif dans le premier mode de fonctionnement, l'accéléromètre 161 est apte à détecter des mouvements. Lorsqu'un mouvement sur le support 100 portant le circuit électronique 1 se produit, l'accéléromètre 161 qui détecte ce mouvement envoie une instruction de réveil. Cette instruction de réveil permet à l'unité de calcul 10, aux autres capteurs du module de détection de mouvement 16, au module de détection de casse 18 et au module de communication 14 de passer du mode dormant au mode actif.

Cela permet ainsi d'utiliser les autres capteurs du module de détection de mouvement 16 pour définir précisément le mouvement.

Cette seconde variante permet avantageusement de réduire la consommation électrique en limitant les composants électronique actifs lorsqu'aucun mouvement n'est détecté.

Dans une première alternative à cette seconde variante, l'accéléromètre 161 utilisé est un accéléromètre dit actif c'est-à-dire nécessitant l'apport d'une tension pour son fonctionnement. Dans ce cas, cet accéléromètre 161 est commandé pour fonctionner différemment suivant les modes de fonctionnement du circuit électronique. Dans le premier mode de fonctionnement, l'accéléromètre actif est commandé afin d'avoir une fréquence de fonctionnement réduite. En effet, la consommation d'un tel accéléromètre vient, en partie, de sa fréquence de fonctionnement c'est-à-dire de la fréquence avec laquelle les mesures sont effectuées. Dès lors, plus cette fréquence est faible et plus la consommation électrique est faible. Au contraire, dans le second mode de fonctionnement, l'accéléromètre est utilisé au maximum de ses capacités en ayant une fréquence de mesure élevée impliquant une forte consommation électrique.

Dans une seconde alternative, l'accéléromètre 161 utilisé est un accéléromètre dit passif c'est-à-dire nécessitant pas l'apport d'une tension pour son fonctionnement. Un tel accéléromètre peut être assimilé à une cage dans laquelle un plot est monté sur ressort. Dès que ce plot subit une accélération supérieure à un seuil prédéfini, ledit plot touche la cage et un signal d'interruption est envoyé depuis ledit accéléromètre. Cette interruption permet ainsi de passer du premier mode de fonctionnement au second mode de fonctionnement. Un avantage de cette alternative est qu'un accéléromètre passif est peu gourmand en énergie puisqu'il ne consomme de l'énergie que lorsqu'il y a un mouvement.

Dans une troisième alternative, le circuit électronique comprend un accéléromètre passif et un accéléromètre actif. Dans cette troisième alternative, le but est ici de combiner les avantages des deux types d'accéléromètre en les faisant fonctionner chacun lors d'un mode de fonctionnement. L'accéléromètre passif est utilisé durant le premier mode de fonctionnement car sa consommation électrique est très faible. Par contre, durant le second mode de fonctionnement c'est l'accéléromètre actif qui sera utilisé. On comprend que l'accéléromètre passif est utilisé pour réveiller le circuit électronique 1 et que l'accéléromètre actif, qui est plus précis, est utilisé pour fournir les données relatives aux mouvements nécessaires pour déterminer la nature desdits mouvements.

Dans une autre alternative à la seconde variante, le passage du premier mode de fonctionnement au second mode de fonctionnement est réalisé par l'intermédiaire du module de détection de casse 18 et plus particulièrement du capteur piézoélectrique. En effet, un tel capteur piézoélectrique est un composant passif qui fonctionne en continue sans besoin d'alimentation permanente.

Dans ce cas-là, il serait envisageable que le capteur piézoélectrique puisse envoyer directement une interruption spécifique qui permet de réveiller l'unité de calcul 10 pour passer du premier mode de fonctionnement au second mode de fonctionnement. De façon préférentielle, le circuit électronique 1 selon l'invention sera agencé pour que l'interruption spécifique envoyée par le capteur piézoélectrique entraine directement la génération et l'envoi d'un signal d'alarme.

Bien entendu, la présente invention ne se limite pas à l'exemple illustré mais est susceptible de diverses variantes et modifications qui apparaîtront à l'homme de l'art.

Par exemple, il sera possible que le circuit électronique 1 selon l'invention incorpore des composants de type sonore ou lumineux permettant la diffusion du signal d'alarme.

De même, il sera possible que le module de communication 14 puisse permettre une communication bidirectionnelle c'est-à-dire qu'il permet l'envoi et la réception de signaux, comme par exemple la réception de signaux de commande notamment pour le paramétrage par l'utilisateur des comportements naturels.

## Revendications

1. Circuit électronique (1) comprenant une unité de calcul (10) a laquelle sont connectés un module de détection de mouvement (16), un module de détection de casse (18) et un module de communication (14), **caractérisé en ce que** ledit module de détection de mouvement (16) est agencé pour acquérir des données représentatives de mouvements issus d'un comportement et les transmettre à l'unité de calcul (10), lequel utilise un algorithme afin de déterminer le type de comportement détecté et opère une réponse spécifique selon ledit type de comportement détecté.

2. Circuit électronique selon la revendication 1, **caractérisé en ce qu'**une première réponse spécifique est la génération et l'envoi d'un signal d'information par le module de communication (14).

3. Circuit électronique selon l'une des revendications précédentes, **caractérisé en ce qu'**une seconde réponse spécifique est la génération et l'envoi d'un signal d'alarme par le module de communication (14).

4. Circuit électronique selon l'une des revendications précédentes, **caractérisé en ce qu'**une troisième réponse spécifique est l'acquisition de données par ledit module de détection de casse (18) et le traitement de ses données pour déterminer une casse.

5. Circuit électronique selon l'une des revendications précédentes, **caractérisé en ce que** ledit module de détection de casse (18) comprend un capteur piézoélectrique.

6. Circuit électronique selon l'une des revendications 1 à 4, **caractérisé en ce que** ledit module de détection de casse (18) comprend un capteur d'humidité.

7. Circuit électronique selon l'une des revendications précédentes, **caractérisé en ce que** le module de détection de mouvement (16) comprend un accéléromètre (161) et un magnétomètre (162).

8. Circuit électronique selon la revendication 7, **caractérisé en ce que** le module de détection de mouvement (16) comprend en outre un gyroscope (163).

9. Vitrage (101) comprenant au moins une vitre **caractérisée en ce qu'**il comprend en outre le circuit électronique (1) selon l'une des revendications 1 à 8

10. Vitrage selon la revendication 9 comprenant une première vitre (111) et une deuxième vitre (112) parallèles et séparées par un cadre espaceur (113) délimitant un espace intercalaire étanche (114) entre lesdites vitres dans lequel le circuit électronique (1) est agencé.

11. Procédé de fonctionnement d'un circuit électronique (1) pour vitrage (101) comprenant une unité de calcul (10) à laquelle sont connectés un module de détection de mouvement (16) comprenant au moins un accéléromètre (161) et un magnétomètre (162), un module de détection de casse (18) et un module de communication (14), **caractérisé en ce qu'**il est apte à fonctionner dans un mode de fonctionnement dit éco dans lequel l'unité de calcul (10), le module de communication (14), le module de détection de casse (18) et le magnétomètre (162) sont en veille, seul l'accéléromètre (161) étant actif, et **en ce que** ledit procédé comprend les étapes suivantes :
- surveiller l'apparition de mouvements issus d'un type de comportement par l'intermédiaire de l'accéléromètre;
- réveiller l'unité de calcul (10), le module de communication (14), le module de détection de casse (18) et le magnétomètre (162) lors de la détection d'un mouvement ;
- acquérir des données représentatives du comportement détecté par l'accéléromètre et le magnétomètre ;
- traiter les données représentatives du comportement par un algorithme de l'unité de calcul afin de déterminer le type de comportement détecté ;
- opérer une réponse spécifique en fonction du type de comportement détecté.

12. Procédé selon la revendication 11, **caractérisé en ce que** l'étape de détermination de la nature du comportement consiste à comparer le comportement détecté à une pluralité de comportements définis préalablement pour déterminer que:
- le comportement est naturel s'il correspond à l'un des comportements définis préalablement ;
- le comportement est non naturel s'il ne correspond pas à l'un des comportements définis préalablement ;
- le comportement est un choc s'il ne correspond pas à l'un des comportements définis préalablement et si l'amplitude de son mouvement est plus faible que pour un mouvement naturel ou non naturel.

13. Procédé selon la revendication 11, **caractérisé en ce qu'**une première réponse spécifique est la génération d'un signal d'information par l'unité de calcul (10) et son envoi par le module de communication (14) lorsqu'un comportement naturel est détecté.

14. Procédé selon la revendication 11, **caractérisé en ce qu'**une seconde réponse spécifique est la génération d'un signal d'alarme par l'unité de calcul (10) et son envoi par le module de communication (14) lorsqu'un comportement non-naturel est détecté.

15. Procédé selon l'une des revendications 11 à 14, **caractérisé en ce que** les types de comportements peuvent être paramétrés manuellement ou paramétrés par un algorithme d'apprentissage analysant les comportements récurrents afin de les intégrer comme étant des comportements de types naturels.

16. Procédé selon l'une des revendications 11 à 12, **caractérisé en ce que** ledit module de détection de casse (18) comprend un capteur d'humidité afin d'acquérir des données lorsque ledit comportement détecté est un choc.

17. Procédé selon l'une des revendications 10 à 12, **caractérisé en ce que** ledit module de détection de casse (18) comprend un capteur piezoélectrique afin d'acquérir des données lorsque ledit comportement détecté est un choc.
